# EUROPEAN PATENT SPECIFICATION

(11) **EP 3 412 949 B1**
(45) Date of publication and mention of the grant of the patent: **24.02.2021**
(21) Application number: 17746854.3
(22) Date of filing: 23.01.2017
(51) Int. Cl.: B29C 37/00, B29C 70/32, B29C 70/86, F16L 33/00, F16L 9/14, F16L 23/024, F16L 23/028

(54) **CONVEYOR SYSTEM, CONVEYOR PIPE, AND MANUFACTURING METHOD THEREOF**
FÖRDERSYSTEM, FÖRDERROHR UND HERSTELLUNGSVERFAHREN DAFÜR
SYSTÈME DE CONVOYEUR, TUYAU DE CONVOYEUR ET LEUR PROCÉDÉ DE FABRICATION

(30) Priority: 05.02.2016 CN 201610081835
(43) Date of publication of application: 12.12.2018
(73) Proprietor: Zoomlion Heavy Industry Science and Technology Co., Ltd., Changsha, Hunan 410013 (CN)
(72) Inventor: FU, Ling, Changsha Hunan 410013 (CN); LIU, Yanbin, Changsha Hunan 410013 (CN); JIANG, Kaige, Changsha Hunan 410013 (CN); GUO, Lunwen, Changsha Hunan 410013 (CN); LI, Fei, Changsha Hunan 410013 (CN)
(74) Representative: Ström & Gulliksson AB
(86) International application number: PCT/CN2017/072165
(87) International publication number: WO 2017/133534

(56) References cited:
- WO-A1-2007/112785
- WO-A1-2013/041948
- CN-A- 101 660 635
- CN-A- 103 256 436
- CN-A- 105 626 979
- CN-U- 204 267 931
- FR-A1- 2 326 651
- US-A- 4 126 157

## Description

### Field of the Invention

The present invention relates to conveyor apparatuses, particularly to a conveyor pipe. Moreover, the present invention further relates to a manufacturing method of the conveyor pipe and a conveyor system that comprises the conveyor pipe.

### Background of the Invention

Pipeline conveying is one of common conveying methods in the material conveyor field. For example, for conveying viscous materials such as concrete, the concrete may be driven by a concrete delivery pump and conveyed continuously through a conveyor pipeline formed by conveyor pipes connected together to a site of placement. The performance of conveyor pipes that serve as important components of distribution apparatuses (e.g., for concrete distribution) has great influence on the production cost and efficiency, etc. Background art is reflected for instance in WO2007/112785A1 and US4126157A.

For conveying materials (e.g., concrete), on one hand, the material that contains rigid particles (e.g., gravels) is conveyed through a conveyor pipeline to a predetermined location (predetermined altitude or predetermined distance), so as to meet the production requirement; on the other hand, the conveyor pipe is subject to the pressure of material and pumping pulses, etc. Resin-based fibrous composite materials have advantages including high specific strength, high specific modulus, high fatigue resistance, and high fail-safety, etc. Therefore, in traditional techniques, the attention in the art is paid mainly to the properties of conveyor pipes in light-weight, wear resistance, and explosion-proof, etc., and resin-based fibrous composite materials are used to manufacture conveyor pipes to obtain appropriate properties in those aspects. For example, the Chinese patents (applications) No. CN202708358U, CN101660635B, CN201412608Y, and CN103115200A disclose such conveyor pipes for concrete conveying respectively.

Specifically, the conveyor pipes disclosed in the above-mentioned prior arts usually have a main pipe (wear-resistant inner pipe), flanges provided at the two ends of the main pipe, and a fibrous layer covered the outer surrounding surface of the main pipe. Utilizing the high specific strength of the fibrous composite material and the wear resistance property of the main pipe, a purpose of light weight design can be attained while the wear-resistant and explosion-proof performance of the conveyor pipe, etc., are ensured. Wherein, the flanges may be connected to the main pipe by welding or casting, etc., or may be bonded to the two ends of the main pipe by means of the fibrous composite material. However, to ensure the wear-resistant performance, the main pipe usually has poor weldability, and the wear-resistant performance of the main pipe is often affected by unreasonably heating; while bonding is susceptible to environmental impacts, and may involve problems such as aging and demanding processing conditions (special surface treatment, and heating, pressurization, and curing, etc. may be required).

Therefore, in existing conveyor pipes provided with a fibrous composite material, flange connections are not reliable. Especially, those skilled in the art may easily neglect that the conveyor pipe is not only subject to axial friction force incurred by material movement but also subject to axial force incurred by problems such as bad assembling accuracy control in the connecting process. Those axial forces will be increased severely when the conveyor pipe is jammed, and may result in connection failure of the flanges and the adjacent conveyor pipes; consequently, the production efficiency may be degraded, the maintenance cost may be increased, and even safety accidents may occur.

Accordingly, it is necessary to provide a conveyor pipe to solve the above-mentioned technical problems in the prior art.

### Contents of the Invention

The technical problem to be solved in the present invention is to provide a conveyor pipe, in which the axial connection strength between a main pipe and pipe connecting members is higher, and connection failure incurred by axial force can be avoided effectively.

To solve the technical problem described above, in a first aspect, the present invention provides a conveyor pipe, which comprises a main pipe, pipe connecting members respectively arranged at two ends of the main pipe, and a fibrous layer covering the outer surrounding surface of the main pipe, wherein the outer surrounding surface of each pipe connecting member is provided with a plurality of protrusions, at least a part of the fibrous composite material of the fibrous layer winds around the main pipe and alternately hooks around the protrusions of the pipe connecting members respectively provided at the two ends of the main pipe, so that a pull force in axial direction is applied to the pipe connecting members by means of the protrusions hooked by the fibrous composite material. Each pipe connecting member has a big end opposite to the main pipe and a small end facing the main pipe, wherein a frustum surface that is tapered in a direction toward the small end is formed on an outer surrounding surface part of the pipe connecting member near the small end.

Preferably, the fibrous composite material comprises a first fibrous composite material and a second fibrous composite material, wherein, the first fibrous composite material winds around the main pipe at a spiral angle α1 smaller than the spiral angle α2 of the second fibrous composite material wound around the main pipe, the second fibrous composite material covers outside the first fibrous composite material, or the first fibrous composite material and the second fibrous composite material wind around the main pipe alternately.

Preferably, 5°≤α1≤45°, and 45°≤a2≤90°.

Preferably, the conveyor pipe further comprises a wear-resistant sleeve, the wear-resistant sleeve and the main pipe are inserted in the pipe connecting member respectively and abut-jointed with each other, and the end of the wear-resistant sleeve away from the main pipe and the end of the pipe connecting member away from the main pipe are level with each other.

Preferably, the wear-resistant sleeve has wall thickness greater than the wall thickness of the main pipe, has a stepped part formed on its outer surrounding surface, and has the same inner diameter as the main pipe.

Preferably, an included angle γ between the end face of the protrusion opposite to the main pipe and the generatrix of the outer surrounding surface part of the pipe connecting member where the protrusion exists is γ≤90°.

Preferably, a flange is formed on the outer surrounding surface of the pipe connecting member at the end away from the main pipe, so as to form a groove for connecting a pipe clamp between the flange and the protrusions.

Preferably, an odd number of protrusions are formed on each pipe connecting member, and the protrusions are distributed evenly in the circumferential direction of the pipe connecting member.

Preferably, 5-45 protrusions are formed on each pipe connecting member.

In a second aspect, the present invention provides a conveyor system, which comprises a plurality of conveyor pipes provided in the present invention, wherein, the conveyor pipes are abut-jointed sequentially via the pipe connecting members to form a conveyor pipeline.

In a third aspect, the present invention provides a manufacturing method of a conveyor pipe, the conveyor pipe comprises a main pipe, pipe connecting members respectively provided at the two ends of the main pipe, and a fibrous layer covering the outer surrounding surface of the main pipe, wherein the outer surrounding surface of each pipe connecting member is provided with a plurality of protrusions, and wherein each pipe connecting member has a big end opposite the main pipe and a small end facing the main pipe, wherein a frustum surface that is tapered in a direction toward the small end is formed on an outer surrounding surface part near the small end; the manufacturing method comprises the following steps:

S1. A fibrous layer winding step, which comprises the following sub-steps: S1-1. fixing an end of the fibrous composite material to a protrusion on the pipe connecting member at a first end of the main pipe; S1-2. making the release end of the fibrous composite material move respectively in the circumferential direction and axial direction of the main pipe relative to the main pipe and the pipe connecting members provided at the two ends of the main pipe, so that the fibrous composite material winds around the main pipe in a direction from the first end of the main pipe to a second end of the main pipe, and then making the release end hook around the protrusions of the pipe connecting member at the second end of the main pipe when the release end reaches to the protrusions, so that a pull force in the axial direction can be applied to the pipe connecting member at the second end of the main pipe by means of the protrusions hooked by the fibrous composite material; S1-3. making the release end of the fibrous composite material move respectively in the circumferential direction and axial direction of the main pipe relative to the main pipe and the pipe connecting members, so that the fibrous composite material winds around the main pipe in a direction toward the first end of the main pipe, and then maing the release end to hook around the protrusions of the pipe connecting member at the first end of the main pipe when the release end reaches to the protrusions, so that a pull force in the axial direction can be applied to the pipe connecting member at the first end of the main pipe by means of the protrusions hooked by the fibrous composite material; S1-4. repeating the sub-steps S1-2 and S1-3.

Preferably, in the sub-steps S1-2 and S1-3, the main pipe and the pipe connecting members are fixed to a mandrel and are driven by the mandrel to rotate; at the same time, the release end is driven to move in the axial direction, so that the fibrous composite material winds around the main pipe, and/or, when the release end reaches to the protrusions of the pipe connecting member, the release end is kept in a stationary state, and at the same time the main pipe and the pipe connecting members are driven by the mandrel to rotate, so that the fibrous composite material is hooked around the protrusions.

Preferably, in the step S1, the fibrous composite material winds around the main pipe and hooks around the protrusions continuously, and each of the protrusions is hooked by the fibrous composite material after the fibrous layer formed.

With the technical scheme described above in the present invention, the fibrous composite material of the fibrous layer is alternately hooked around the protrusions of the pipe connecting members at the two ends of the main pipe, and a pull force can be applied to the pipe connecting members via the protrusions to balance off the axial force caused by the conveyed material and adjacent conveyor pipes; thus, the strength of connection between the main pipe and the pipe connecting members is improved, and thereby connection failure incurred by the axial force can be avoided.

Other features and advantages of the present invention will be further detailed in the embodiments hereunder.

### Brief Description of the Drawings

The accompanying drawings are provided here to facilitate further understanding on the present invention, and constitute a part of this document. They are used in conjunction with the following embodiments to explain the present invention, but shall not be comprehended as constituting any limitation to the present invention. In the figures:
Fig. 1 is a schematic sectional view of inter-connected conveyor pipes according to a preferred embodiment of the present invention;
Fig. 2 is a schematic diagram illustrating the winding of the fibrous layer on the conveyor pipe in Fig. 1;
Figs. 3a and 3b are schematic sectional views of the pipe connecting member of the conveyor pipe in Fig. 1 in axial direction and radial direction;
Fig. 4 is a schematic sectional view of the wear-resistant sleeve of the conveyor pipe in Fig. 1;
Fig. 5 is a schematic sectional view of the pipe clamp for connecting the conveyor pipes in Fig. 1;
Figs. 6a and 6b are schematic 3D view and sectional view of the main pipe and wear-resistant sleeve plugged in the pipe connecting member;
Figs. 7a and 7b are front view and sectional view of the main pipe wound with the first fibrous composite material respectively;
Figs. 8a and 8b are front view and sectional view of the main pipe wound with the second fibrous composite material respectively;
Fig. 9 is a process flow chart of the sub-steps in the step of winding the fibrous layer.

### Detailed Description of the Embodiments

Hereunder some embodiments of the present invention will be detailed with reference to the accompanying drawings. It should be understood that the embodiments described here are only provided to describe and explain the present invention, but shall not be deemed as constituting any limitation to the present invention.

In the present invention, unless otherwise specified, the orientation term "circumferential direction" usually refers to a direction around the center line of the conveyor pipe, and the orientation term "axial direction" usually refers to a direction parallel to the center line. The terms "first" and "second" are only used for the convenience of description rather than defining structural difference. For example, the first end and the second end of the main pipe 1 may have structures that are fully identical to each other.

In addition, it should be understood: though the main pipe 1 and the wear-resistant sleeve 4 are formed as an integral revolving body structure respectively in the illustrated preferred embodiment, the present invention is not limited to those structures. For examples, the above-mentioned components may be formed as prism structures; in such a case, they also can be used to form a material conveyor pipe and can attain corresponding purpose with the technical scheme provided in the present invention.

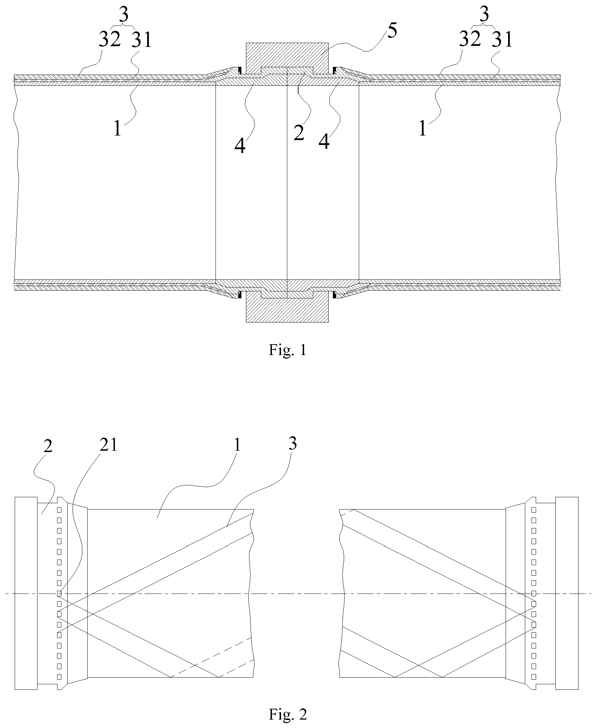

As shown in Figs. 1 and 2, the present invention in one aspect provides a conveyor pipe, which comprises a main pipe 1, pipe connecting members 2 (e.g., flanges) respectively provided at the two ends of the main pipe 1, and a fibrous layer 3 covering the outer surrounding surface of the main pipe 1. Similar to conventional techniques, the conveyor pipe in such a structure can be configured appropriately to conveniently utilize the high wear resistance property of the main pipe 1 and the high specific strength of the fibrous layer 3, so as to attain a purpose of light weight design while ensuring the wear resistant and explosion-proof performance of the conveyor pipe.

Importantly, in the conveyor pipe provided in the present invention, a plurality of protrusions 21 are provided on the outer surrounding surface of each of the pipe connecting members 2 provided at the two ends of the main pipe 1. At least a part of the fibrous composite material of the fibrous layer 3 winds around the main pipe 1 and alternately hooks around (i.e., hung on) the protrusions 21 of the pipe connecting members 2 respectively provided at the two ends of the main pipe 1, so that a pull force in an axial direction can be applied to the pipe connecting member 2 via the fibrous composite material hooking around the protrusions 21. Namely, by hooking the fibrous composite material wound on the main pipe 1 around the protrusions 21, the fibrous composite material can generate a pull force between the main pipe 1 and the pipe connecting members 2, and the pull force mainly has (but is not limited to) an axial force component along the main pipe 1, so as to improve the strength of axial connection between the main pipe 1 and the pipe connecting members 2. In conveying process, the force component generated by the fibrous composite material can balance off the axial force that is generated by the interaction between adjacent material conveyor pipes and tends to separate the pipe connecting members 2 from the main pipe 1, and thereby can avoid connection failure between the main pipe 1 and the pipe connecting members 2.

In the present invention, in view of the technical problem of inadequate strength of axial connection between the main pipe and the pipe connecting members of a conveyor pipe in the prior art, a fibrous layer 3 is configured in an innovative way that the fibrous composite material of the fibrous layer 3 is alternately hooked around on the protrusions 21 of the pipe connecting members 2, so that a pull force in an axial direction can be applied between the main pipe 1 and the pipe connecting members 2 at the two ends of the main pipe 1, and thereby the integrity of the conveyor pipe is improved effectively, and correspondingly the reliability and safety of the conveyor system are improved.

On that basis, the parts of the conveyor pipe in the present invention may be formed in any appropriate form, and may be connected together in an appropriate way. Hereunder the present invention will be described mainly in an illustrated preferred embodiment.

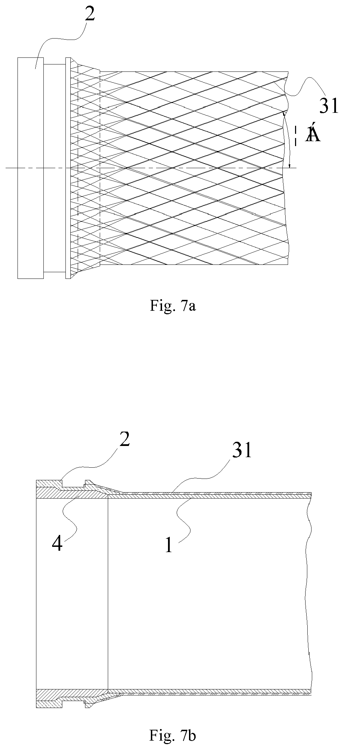

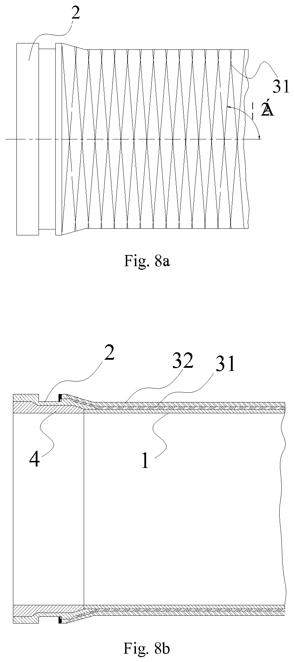

As shown in Fig. 1 and Figs. 7a-8b, in the conveyor pipe in a preferred embodiment of the present invention, the fibrous composite material to be wound to form a fibrous layer 3 may comprise a first fibrous composite material 31 and a second fibrous composite material 32. Wherein, the first fibrous composite material 31 winds on the main pipe 1 at a spiral angle α1 smaller than a spiral angle α2 of the second fibrous composite material 32 wound on the main pipe 1. Here and in the following text, the spiral angle may be represented by an included angle between the extension direction of the fibrous composite material and a straight line on the outer surrounding surface of the main pipe 1 parallel to the center line of the main pipe 1, as shown in Figs. 7a and 7b. With such an arrangement, both the axial connection strength and the explosion-proof performance of the conveyor pipe can be ensured conveniently. It should be understood: the first fibrous composite material 31 and the second fibrous composite material 32 in the present invention are only used to differentiate the spiral angles of winding and the morphologies of the fibrous composite material on the main pipe 1 after the winding, rather than defining the first fibrous composite material 31 and the second fibrous composite material 32 as fibrous composite materials that are different in nature. For example, they may be the same set of fiber yarns, and thereby it is unnecessary to replace the tool (e.g., a winding head) in the winding process. Thus, high manufacturing efficiency is achieved. Or, when necessary (i.e., when higher explosion-proof performance is required), a second fibrous composite material 32 that has higher tensile strength may be selected.

Specifically, with a 45° angle as a demarcation, when the spiral angle of the fibrous composite material is smaller, the fibrous composite material can bear higher axial tensile force, so that the strength of axial connection between the main pipe 1 and the pipe connecting members 2 can be improved effectively. Therefore, the first fibrous composite material 31 can provide a higher pull force in an axial direction. To that end, the spiral angle α1 of the first fibrous composite material 31 wound on the main pipe 1 preferably is 5°≤α1≤45°, so as to mainly improve the strength of axial connection of the conveyor pipe.

When the spiral angle of the fibrous composite material is greater, the fibrous composite material can provide a pull force mainly in the circumferential direction of the main pipe 1. The pull force can restrain radial expansion of the main pipe 1 and thereby improve the explosion-proof performance of the conveyor pipe. Therefore, the second fibrous composite material 32 can provide a higher circumferential pull force. To that end, the spiral angle α2 of the second fibrous composite material 32 wound on the main pipe 1 preferably is 45°≤α2≤90°, so as to mainly improve the explosion-proof performance of the conveyor pipe.

As shown in Fig. 1, the second fibrous composite material 32 may be covered outside the first fibrous composite material 31. Namely, first, the required first fibrous composite material 31 winds on the outer surrounding surface of the main pipe 1; the first fibrous composite material 31 may be wound on the main pipe 1 repeatedly for several times to form a plurality of layers, and thereby achieves required axial connection strength; then, the second fibrous composite material 32 may be wound on the first fibrous composite material 31 wound on the external surface of the main pipe 1, to achieve required explosion-proof performance. Since the fibrous composite materials can be wound continuously respectively, the winding efficiency of the conveyor pipe in such an arrangement can be improved. In addition, by arranging the first fibrous composite material 31 that has a smaller spiral angle closer to the main pipe 1, the tensile strength of the first fibrous composite material 31 can be utilized fully, so as to effectively improve the axial connection strength of the conveyor pipe.

As an alternative, the first fibrous composite material 31 and the second fibrous composite material 32 may be winded alternately. Namely, first, one or more layers of the first fibrous composite material 31 (or the second fibrous composite material 32) may be wound on the outer surrounding surface of the main pipe 1, and then the second fibrous composite material 32 (or the first fibrous composite material 31) may be wound on the fibrous composite material that winds previously. Since the two fibrous composite materials are distributed alternately, the integrity of the fibrous layer 3 is better, and the two fibrous composite materials can play their roles in axial and circumferential directions uniformly relatively.

The first fibrous composite material 31 and the second fibrous composite material 32 may be wound on the main pipe 1 through similar processes, as further detailed in the following text.

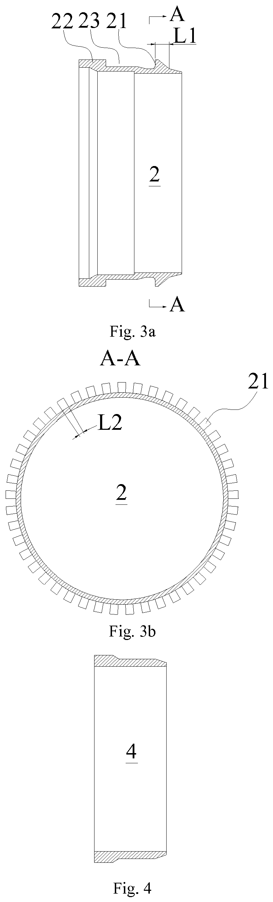

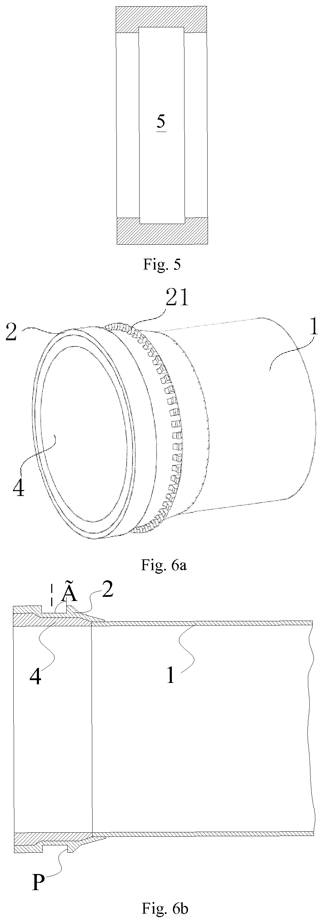

The protrusions 21 around which the fibrous composite material is hooked may be formed in a variety of appropriate structures. As shown in Figs. 3a-3b and 6a-6b, in a preferred embodiment of the present invention, an included angle γ between the end face P of the protrusion 21 of the pipe connecting member 2 opposite to the main pipe 1 and the generatrix of the outer surrounding surface part of the pipe connecting member 2 where the protrusion 21 exists is γ≤90°, to enable the fibrous composite material to apply a pull force via the protrusion 21. Specifically, the force application point where the fibrous composite material applies a pull force to the pipe connecting member 2 is the end face P of the protrusion 21 opposite to the main pipe 1. The end face P can retain the fibrous composite material well and avoid slip-out of the fibrous composite material under certain pull force. If the end face P has the above-mentioned included angle γ, it can well retain the fibrous composite material hooked around it, and can facilitate the application of the pull force. For example, it is seen from Fig. 6b: the included angle γ between the protrusion 21 and the generatrix in the illustrated preferred embodiment is about 90°, i.e., the end face P of the protrusion 21 opposite to the main pipe 1 essentially extends in the radial direction. Such a structure further has good processability.

As described above, the protrusions 21 on the pipe connecting members 2 in the present invention are mainly used to enable the fibrous composite material to apply axial force, and the conveyor pipe essentially doesn't bear any circumferential acting force in the actual operation. In consideration of the light weight requirement and the manufacturing process of the conveyor pipe (the forming process of the pipe connecting members 2, and the winding process of the fibrous composite material, etc.), optimization design can be carried out for the structure, arrangement, and quantity of the protrusions 21 on the pipe connecting members 2, etc. On one hand, to arrange the protrusions 21, if the axial dimension of the pipe connecting member 2 is too great, it will be adverse to the light weight requirement. Therefore, the axial dimension L1 of the connection face between the protrusions 21 and the outer surrounding surface of the pipe connecting member 2 should not be too great; on the other hand, in the case that the axial dimension L1 of the connection face between the protrusions 21 and the outer surrounding surface of the pipe connecting member 2 is limited, the circumferential dimension L2 of the connection face or the distribution density of the protrusions 21 has to be increased to ensure adequate connection strength, but the winding of the fibrous composite material will be affected if the circumferential dimension L2 is too great or excessive protrusions 21 are provided.

In view of that, the protrusion 21 may be formed in the following structure: in a cross section along the center line of the main pipe 1, the section of the protrusion 21 is generally in a triangular shape, and has an oblique edge that comes closer to the center line in the direction toward the main pipe 1 (the oblique edge is helpful for transition to the frustum surface in the preferred embodiment described below), as shown in Fig. 3a; in a cross section perpendicular to the center line, the end face P of the protrusion 21 is generally in a rectangular shape, as shown in Fig. 3b. Thus, utilizing the stability of a triangle, the protrusion 21 can bear a greater pull force in the axial direction.

Moreover, the protrusions 21 may be distributed evenly in the circumferential direction, to facilitate uniform winding of the fibrous composite material. In the illustrated embodiment, a row of protrusons 21 are formed on each pipe connecting member 2. Thus, not only the winding uniformity of the fibrous composite material can be further improved, but also the winding speed and the processability can be improved.

Furthermore, an odd number of protrusions 21 may be formed on each pipe connecting member 2, and the protrusions 21 are evenly distributed in the circumferential direction of the pipe connecting member 2, so that winding can be executed continuously and uniformly, and a pull force in the axial direction can be applied well after the winding. For the convenience of description, as shown in Fig. 2, here the protrusions 21 on each pipe connecting member 2 are categorized into odd protrusions and even protrusions orderly, and the pipe connecting members 2 at the two ends of the main pipe 1 are arranged symmetrically. Suppose the first protrusion on the pipe connecting member 2 at the first end of the main pipe 1 is the start point for winding of the fibrous composite material, the winding head will be moved by a predetermined distance and the fibrous composite material will be hooked around the protrusion n (n may be an odd number or even number) on the pipe connecting member 2 at the second end when the fibrous composite material winds to the pipe connecting member 2 at the second end. Then, the winding head winds from the second end toward the first end. When the winding head reaches to the first end, the movement distance in the circumferential direction should be equal to the predetermined distance in the previous winding process from the first end to the second end, i.e., the fibrous composite material is hooked around the protrusion 2n-1, to ensure winding uniformity of the fibrous composite material. It is seen that the fibrous composite material hooked around any protrusion 21 (e.g., the above-mentioned protrusion n) on the pipe connecting member 2 at the second end corresponds to an odd protrusion (e.g., the first protrusion 1 or the protrusion 2n-1) or even protrusion (if an even protrusion is used as the start point of winding of the fibrous composite material) at the two sides of the protrusion 21. If an even number of protrusions 21 are formed on each pipe connecting member 2, a broken end has to be formed, or different winding heads have to be used to wind the fibrous composite material on each of the protrusions 21; otherwise it is unable to achieve maximum efficacy, or the fibrous composite materials wound on the same protrusion 21 can't generate resultant axial force owing to non-uniform winding. In the preferred embodiment of the present invention, an odd number of protrusions 21 are formed; thus, the fibrous composite material can be wound continuously, because the odd protrusions and even protrusions will be changed over after the fibrous composite material winds around the pipe connecting member 2 (i.e., in different winding processes, the protrusions 21 are both odd protrusions and even protrusions). Therefore, the fibrous composite material can be hooked around each of the protrusions 21 continuously.

It should be understood that the number of protrusions 21 should be selected specifically according to the dimension (in radial direction or circumferential direction) of the pipe connecting members 2, so as to improve the forming process of the pipe connecting members 2 and the winding process of the fibrous composite material while ensuring appropriate connection strength. Preferably, 5∼45 protrusions 21 are formed on each pipe connecting member 2, so that a required spiral angle of the fibrous composite material is formed. In addition, for pipe connecting members 2 in common dimensions, such an arrangement can ensure a good forming process of the pipe connecting members 2 and convenient winding of the fibrous composite material, while the connection strength of the protrusions 21 on the pipe connecting members 2 is ensured. Further preferably, 7 or 9 protrusions are formed on each pipe connecting member 2.

As shown in Figs. 1, 3a and 5, to enable the conveyor pipes to be abut-jointed sequentially via the pipe connecting members 2 to form a conveyor pipeline, a flange 22 may be formed on the outer surrounding surface of each pipe connecting member 2 at the end away from the main pipe 1, so that a groove 23 is formed between the flange 22 and the protrusions 21, and thereby the adjacent conveyor pipes can be abut-jointed together by clamping corresponding pipe clamps 5 in the grooves 23. Though not shown in the figures, it should be understood that the pipe clamp 5 may be formed by two semi-circular structures (e.g., hinged together), so that the pipe clamp can be clamped in the groove 23 when adjacent conveyor pipes are placed in the abut-jointing position. With such an arrangement of the pipe connecting members 2 and such a connection between the conveyor pipes that is determined on the basis of the arrangement, the conveyor pipes have certain degree of rotational freedom, and thereby circumferential stress can be relieved, so as to reduce or even avoid the adverse effect on the connection between the pipe connecting members 2 and the main pipe 1 in the circumferential direction.

As shown in the figures, the circumferential dimension of the main body part of the pipe connecting member 2 is usually greater than the circumferential dimension of the main pipe 1, so that the wear-resistant sleeve 4 described below can be plugged. Especially, in the case that the protrusions 21 are provided, it may be difficult for the fibrous composite material to closely adhere to the surface of the main pipe 1 or pipe connecting member 2; consequently, clearance may be generated between the fibrous layer 3 and the main pipe 1 or pipe connecting member 2, and may prevent the fibrous layer 3 from taking effect in the circumferential direction; as a result, the explosion-proof performance of the conveyor pipe may be compromised. In view of that problem, a frustum surface tapered in a direction toward the main pipe 1 is formed on the outer surrounding surface of each pipe connecting member 2 at the end near the main pipe 1; namely, if the end of the pipe connecting member 2 opposite to the main pipe is defined as a big end and the other end is defined as a small end, the frustum surface is at a position near the small end and tapered in a direction toward the small end. Thus, the fibrous composite material wound at a predetermined spiral angle can closely adhere to the frustum surface and gradually transit to the main pipe 1, so that any clearance is avoided.

The conveyor pipe that has the fibrous layer 3 mainly utilizes the advantages of the components to improve the overall performance of the conveyor pipe. For example, in view that the main pipe 1 is mainly subject to material erosion, the main pipe 1 may be configured to have a high wear-resistance property, and typically the main pipe 1 may be made of high-carbon steel material; in view that the fibrous composite material has high tensile strength, the fibrous composite material may be covered the main pipe 1 to improve axial connection strength and explosion-proof performance, etc.; since the pipe connecting members 2 are provided at the two ends of the conveyor pipe to connect adjacent conveyor pipes and may collide with the adjacent conveyor pipes in the operating process, the pipe connecting members 2 must have certain toughness.

Typically, the pipe connecting members 2 may be made of high-strength low-alloy steel material. However, in that case, the wear resistance property of the pipe connecting members 2 is relatively poor; as a result, the pipe connecting members 2 may get worn and can't be used any more if they are directly exposed to the material. In view of that problem, as shown in Figs. 1 and 4, the conveyor pipe according to a preferred embodiment of the present invention further comprises a wear-resistant sleeve 4, the wear-resistant sleeve 4 and the main pipe 1 are plugged in the pipe connecting member 2 respectively and are abut-jointed with each other, to avoid direct contact between the pipe connecting member 2 and the material. In addition, for the convenience of connection of the conveyor pipes, the end of the wear-resistant sleeve 4 away from the main pipe 1 and the end of the pipe connecting member 2 away from the main pipe 1 are flush to each other. Typically, the wear-resistant sleeve 4 may be made of high-carbon steel or wear-resistant cast iron material. Though the pipe connecting members 2 are connected at the two ends of the main pipe 1 by plug-in mounting in the preferred embodiment, the present invention is not limited to that mounting method. For example, the pipe connecting members 2 may be preliminarily connected by spot welding or bonding, so that the fibrous composite material can be wound conveniently.
At the joint part between the conveyor pipes, usually high friction exists between the material and the wear-resistant sleeve 4 because the material flow is affected by connection accuracy, etc. In view of that problem, the wear-resistant sleeve 4 may be configured to have wall thickness greater than the wall thickness of the main pipe 1 and have the same inner diameter as the main pipe 1. In addition, to enable the wear-resistant sleeve 4 to be positioned in the axial direction conveniently, a stepped part may be formed on the outer surrounding surface of side wall of the wear-resistant sleeve 4, so that the wear-resistant sleeve 4 can be positioned in the assembling position by means of the fitting between the stepped part and a corresponding structure on the inner surrounding surface of the pipe connecting member 2.

The conveyor pipe provided in the present invention is described in the above text. On that basis, the present invention further provides a conveyor system, which comprises a plurality of conveyor pipes described above, and the plurality of conveyor pipes are abut-jointed sequentially via the pipe connecting members 2 to form a conveyor pipeline. The conveyor system may be used to convey materials such as concrete.

Furthermore, the present invention further provides a manufacturing method of the conveyor pipe described above. Hereunder the manufacturing method will be detailed. It should be understood that the manufacturing method of the above-mentioned conveyor pipe is not limited to the manufacturing method described below. The conveyor pipe may be manufactured with any other method if appropriate. In addition, the technical features of the conveyor pipe in the above-mentioned preferred embodiments may be used in the manufacturing method provided in the present invention if required.

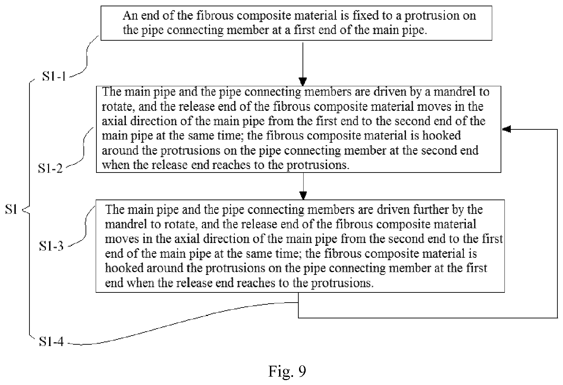

Please see Figs. 6a-9, the conveyor pipe to be manufactured comprises a main pipe 1, pipe connecting members 2 respectively provided at the two ends of the main pipe 1, and a fibrous layer 3 covers the outer surrounding surface of the main pipe 1, wherein, the outer surrounding surface of the pipe connecting member 2 is provided with a plurality of protrusions 21. The manufacturing method in the present invention comprises: S1. a step of winding the fibrous layer 3. Specifically, as shown in Fig. 9, the step S1 comprises the following sub-steps:
S1-1. Fixing an end of the fibrous composite material to a protrusion 21 on the pipe connecting member 2 at a first end of the main pipe 1. For example, the end may be fixed to an appropriate position on the protrusion 21 by spraying fast-curing resin glue.
S1-2. Driving the release end of the fibrous composite material (e.g., the end of the fiber yarn released from the winding head near the winding head) to move respectively in the circumferential direction and axial direction of the main pipe 1 relative to the main pipe 1 and the pipe connecting members 2 provided at the two ends of the main pipe 1, so that the fibrous composite material winds on the main pipe 1 in a direction from the first end of the main pipe 1 to a second end of the main pipe 1, and causing the release end to hook around the protrusions 21 of the pipe connecting member 2 at the second end of the main pipe 1 when the release end reaches to the protrusions 21, so that a pull force in an axial direction in a direction toward the first end of the main pipe 1 can be applied to the pipe connecting member 2 at the second end of the main pipe 1 by means of the protrusions 21.
S1-3. Driving the release end of the fibrous composite material to move respectively in the circumferential direction and axial direction of the main pipe 1 relative to the main pipe 1 and the pipe connecting members 2, so that the fibrous composite material winds on the main pipe 1 in a direction toward the first end of the main pipe 1, and causing the release end to hook around the protrusions 21 of the pipe connecting member 2 at the first end of the main pipe 1 when the release end reaches to the protrusions 21, so that a pull force in an axial direction toward the second end of the main pipe 1 can be applied to the pipe connecting member 2 at the first end of the main pipe 1 by means of the protrusions 21.
S1-4. Repeating the sub-steps S1-2 and S1-3, till the fibrous layer 3 is formed.

In the above-mentioned winding process (i.e., in the sub-steps S1-2 and S1-3), the relative movement between the fibrous composite material and the main pipe 1 and pipe connecting members 2 may be implemented in a variety of ways. For example, one of the fibrous composite material and the main pipe 1/pipe connecting member 2 may be kept in a stationary state, and the other may be drive to rotate around the center line of the main pipe 1, so that required relative movement in the circumferential direction can be achieved, and required relative movement in the axial direction can be achieved by moving in the axial direction; alternatively, both of the fibrous composite material and the main pipe 1/pipe connecting member 2 may be moved simultaneously.

In a preferred embodiment according to the present invention, the main pipe 1 and pipe connecting members 2 are fixed to a mandrel (not shown) and are driven by the mandrel to rotate; at the same time, the release end of the fibrous composite material is driven to move in the axial direction, so that the fibrous composite material can be wound on the main pipe 1 at a predetermined spiral angle, and/or, when the release end of the fibrous composite material reaches to the protrusions 21 on the pipe connecting member 2 (i.e., moves in the axial direction till it passes by the clearance between adjacent protrusions 21), the release end is kept in a stationary state, and at the same time the main pipe 1 and the pipe connecting members 2 are driven by the mandrel to rotate, so that the fibrous composite material is hooked around the protrusions 21. Wherein, the speeds of relative movement in the sub-steps S1-2 and S1-3 may be identical, so that the fibrous composite material winds uniformly. In addition, the speed of relative movement may be changed in the winding process to obtain different spiral angles. For example, in the preferred embodiment described above, if the rotation speed of the main pipe 1 and pipe connecting members 2 is kept constant, the spiral angle may be decreased by increasing the movement speed of the release end of the fibrous composite material in the axial direction.

On that basis, the preferred embodiment of the present invention provides a winding method of the fibrous composite material, which can achieve satisfactory axial connection strength and explosion-proof performance; in addition, a first fibrous composite material 31 and a second fibrous composite material 32 are formed at different spiral angles. Specifically, when the first fibrous composite material 31 winds, the rotation speed of the main pipe 1 and pipe connecting members 2 is controlled to be smaller than the rotation speed for winding the second fibrous composite material 32; and/or the movement speed of the release end of the fibrous composite material is controlled to be greater than the movement speed for winding the second fibrous composite material 32, so that the spiral angle α1 of the first fibrous composite material 31 wound on the main pipe 1 is smaller than that the spiral angle α2 of the second fibrous composite material 32 wound on the main pipe 1.

As shown in Figs. 7a-8b, first, the first fibrous composite material 31 may be wound at a spiral angle α1 on the main pipe 1 at a lower relative movement speed in the circumferential direction and/or a higher relative movement speed in the axial direction; then, the second fibrous composite material 32 may be wound outside the first fibrous composite material 31 at a spiral angle α2 at a higher relative movement speed in the circumferential direction and/or a lower relative movement speed in the axial direction. As an alternative, the relative movement speeds may be changed alternately, so that the first fibrous composite material 31 and the second fibrous composite material 32 are winded alternately.

As described above, the conveyor pipe provided in the present invention may comprise a wear-resistant sleeve 4, the wear-resistant sleeve 4 has wall thickness greater than the wall thickness of the main pipe 1 and is provided with a stepped part on its outer surrounding surface, and the pipe connecting member 2 has a corresponding fitting structure formed on its inner surrounding surface, and has a big end and a small end. In addition, the wear-resistant sleeve 4 has the same inner diameter as the main pipe 1. In such a case, the manufacturing method in the present invention further comprises: S0. a step of plugging the wear-resistant sleeve 4 and the inner pipe 1 into the pipe connecting members 2.

Specifically, as shown in Figs. 6a-6b, the step S0 is executed before the step S1, and the step S0 comprises the following sub-steps:
S0-1. pressing the wear-resistant sleeve 4 into the pipe connecting member 2 in interference fit from the big end of the pipe connecting member 2, till the big end is flush to one end of the wear-resistant sleeve 4 and the stepped part of the wear-resistant sleeve 4 is right fitted with the corresponding fitting structure on the inner surrounding surface of the pipe connecting member 2.
S0-2. pressing the main pipe 1 into the pipe connecting member 2 in interference fit from the small end of the pipe connecting member 2, till the end of the main pipe 1 is abut-jointed with the other end of the wear-resistant sleeve 4, and thereby the main pipe 1 and the wear-resistant sleeve 4 can completely isolate the conveyed material from the pipe connecting member 2 to avoid abrasion of the pipe connecting member 2.

Preferably, in the step S1, the fibrous composite material may be wound on the main pipe 1 and hooked around the protrusions 21 continuously, and the fibrous composite material is hooked around each of the protrusions 21 after the fibrous layer 3 winds and formed. In that case, with reference to the above analysis, an odd number of protrusions 21 may be arranged evenly in the circumferential direction of each pipe connecting member 2 to ensure that the fibrous composite materials hooked on the same protrusion 21 have the same spiral angle before and after the hooking, so as to ensure that the fibrous composite material winds on the main pipe 1 uniformly and exert its maximum performance. Thus, on one hand, the fibrous composite material can be wound continuously and efficiently without forming any broken end or using different winding heads; on the other hand, the conveyor pipe has relatively high mechanical properties. While some preferred embodiments of the present invention are described above with reference to the accompanying drawings, the present invention is not limited to the details in those embodiments. Those skilled in the art can make modifications and variations to the technical scheme of the present invention, without departing from the P scope of the appended claims.

## Claims

1. A conveyor pipe, comprising a main pipe (1), pipe connecting members (2) respectively arranged at two ends of the main pipe (1), and a fibrous layer (3) covering the outer surrounding surface of the main pipe (1), wherein the outer surrounding surface of each pipe connecting member (2) is provided with a plurality of protrusions (21), at least a part of fibrous composite material of the fibrous layer (3) winds around the main pipe (1) and alternately hooks around the protrusions (21) of the pipe connecting members (2) respectively provided at the two ends of the main pipe (1), so that a pull force in axial direction is applied to the pipe connecting members (2) by means of the protrusions (21) hooked by the fibrous composite material, **characterized in that** each pipe connecting member (2) has a big end opposite the main pipe (1) and a small end facing the main pipe (1), wherein a frustum surface that is tapered in a direction toward the small end is formed on an outer surrounding surface part near the small end.

2. The conveyor pipe according to claim 1, wherein the fibrous composite material comprises a first fibrous composite material (31) and a second fibrous composite material (32), wherein, the first fibrous composite material (31) winds around the main pipe (1) at a spiral angle α1 smaller than a spiral angle α2 of the second fibrous composite material (32) wound around the main pipe (1), the second fibrous composite material (32) covers outside the first fibrous composite material (31), or the first fibrous composite material (31) and the second fibrous composite material (32) wind around the main pipe alternately.

3. The conveyor pipe according to claim 2, wherein, 5°≤α1≤45°, and 45°≤α2≤90°.

4. The conveyor pipe according to claim 1, wherein the conveyor pipe further comprises a wear-resistant sleeve (4), the wear-resistant sleeve (4) and the main pipe (1) are inserted in the pipe connecting member (2) respectively and abut-jointed with each other, and the end of the wear-resistant sleeve (4) away from the main pipe (1) and the end of the pipe connecting member (2) away from the main pipe (1) are level with each other.

5. The conveyor pipe according to claim 4, wherein the wear-resistant sleeve (4) has wall thickness greater than the wall thickness of the main pipe (1), has a stepped part formed on its outer surrounding surface, and has the same inner diameter as the main pipe (1).

6. The conveyor pipe according to claim 1, wherein an included angle between the end face (P) of the protrusion (21) opposite to the main pipe (1) and the generatrix of the outer surrounding surface part of the pipe connecting member (2) where the protrusion (21) exists is γ≤90°.

7. The conveyor pipe according to claim 1, wherein a flange (22) is formed on the outer surrounding surface of the pipe connecting member (2) at the end away from the main pipe (1), so as to form a groove (23) for connecting a pipe clamp (5) between the flange (22) and the protrusions (21).

8. The conveyor pipe according to any one of claims 1-7, wherein an odd number of protrusions (21) are formed on each pipe connecting member (2), and the protrusions (21) are distributed evenly in the circumferential direction of the pipe connecting member (2).

9. The conveyor pipe according to claim 8, wherein 5-45 protrusions (21) are formed on each pipe connecting member (2).

10. A conveyor system comprising a plurality of conveyor pipes according to any one of claims 1-9, wherein the conveyor pipes are abut-jointed sequentially via the pipe connecting members (2) to form a conveyor pipeline.

11. A manufacturing method of a conveyor pipe that comprises a main pipe (1), pipe connecting members (2) respectively provided at the two ends of the main pipe (1), and a fibrous layer (3) covering the outer surrounding surface of the main pipe (1), wherein the outer surrounding surface of each pipe connecting member (2) is provided with a plurality of protrusions (21), wherein each pipe connecting member (2) has a big end opposite the main pipe (1) and a small end facing the main pipe (1), and wherein a frustum surface that is tapered in a direction toward the small end is formed on an outer surrounding surface part near the small end; said manufacturing method comprising the following steps:
S1. A step of winding the fibrous layer (3), which comprises the following sub-steps:
S1-1. Fixing an end of the fibrous composite material to a protrusion (21) on the pipe connecting member (2) at a first end of the main pipe (1);
S1-2. Making the release end of the fibrous composite material move respectively in the circumferential direction and axial direction of the main pipe (1) relative to the main pipe (1) and the pipe connecting members (2) provided at the two ends of the main pipe (1), so that the fibrous composite material winds around the main pipe (1) in a direction from the first end of the main pipe (1) to a second end of the main pipe (1), and then making the release end hook around the protrusion (21) of the pipe connecting member (2) at the second end of the main pipe (1) when the release end reaches to the protrusion (21), so that a pull force in the axial direction can be applied to the pipe connecting member (2) at the second end of the main pipe (1) by means of the protrusion (21) hooked by the fibrous composite material;
S1-3. Making the release end of the fibrous composite material move respectively in the circumferential direction and axial direction of the main pipe (1) relative to the main pipe (1) and the pipe connecting members (2), so that the fibrous composite material winds around the main pipe (1) in a direction toward the first end of the main pipe (1), and then making the release end hook around the protrusion (21) of the pipe connecting member (2) at the first end of the main pipe (1) when the release end reaches to the protrusion (21), so that a pull force in the axial direction can be applied to the pipe connecting member (2) at the first end of the main pipe (1) by means of the protrusion (21) hooked by the fibrous composite material;
S1-4. Repeating the sub-steps S1-2 and S1-3.

12. The manufacturing method according to claim 11, wherein, in the sub-steps S1-2 and S1-3, the main pipe (1) and the pipe connecting members (2) are fixed to a mandrel and are driven by the mandrel to rotate; at the same time, the release end is driven to move in the axial direction, so that the fibrous composite material winds around the main pipe (1), and/or, when the release end reaches to the protrusions (21) of the pipe connecting member (2), the release end is kept in a stationary state, and at the same time, the main pipe (1) and the pipe connecting members (2) are driven by the mandrel to rotate, so that the fibrous composite material is hooked around the protrusion (21).

13. The manufacturing method according to claim 11 or 12, wherein, in the step S1, the fibrous composite material winds around the main pipe (1) and hooks around the protrusions (21) continuously, and each of the protrusions (21) is hooked by the fibrous composite material after the fibrous layer (3) formed.

## Patentansprüche

1. Förderrohr, das ein Hauptrohr (1), Rohrverbindungselemente (2), die jeweils an zwei Enden des Hauptrohrs (1) angeordnet sind, und eine Faserschicht (3), die die äußere Umgebungsfläche des Hauptrohrs (1) bedeckt, aufweist, wobei die äußere Umgebungsfläche jedes Rohrverbindungselements (2) mit einer Vielzahl von Vorsprüngen (21) ausgebildet ist, wobei sich zumindest ein Teil eines Faserverbundwerkstoffmaterials der Faserschicht (3) um das Hauptrohr (1) windet und sich abwechselnd um die Vorsprünge (21) der Rohrverbindungselemente (2), die jeweils an den beiden Enden des Hauptrohrs (1) ausgebildet sind, hakt, so dass eine Zugkraft in axialer Richtung auf die Rohrverbindungselemente (2) mithilfe der Vorsprünge (21) ausgeübt wird, die von dem Faserverbundwerkstoffmaterial eingehakt sind, **dadurch gekennzeichnet, dass** jedes Rohrverbindungselement (2) ein großes Ende, das dem Hauptrohr (1) gegenüberliegt, und ein kleines Ende, das dem Hauptrohr (1) zugewandt ist, aufweist, wobei eine kegelstumpfförmige Oberfläche, die sich in einer Richtung zu dem kleinen Ende hin verjüngt, auf einem äußeren Umgebungsflächenteil nahe dem kleinen Ende ausgebildet ist.

2. Förderrohr nach Anspruch 1, wobei das Faserverbundwerkstoffmaterial ein erstes Faserverbundwerkstoffmaterial (31) und ein zweites Faserverbundwerkstoffmaterial (32) aufweist, wobei sich das erste Faserverbundwerkstoffmaterial (31) mit einem Spiralwinkel α1 um das Hauptrohr (1) windet, der kleiner als ein Spiralwinkel α2 des zweiten Faserverbundwerkstoffmaterial (32) ist, das um das Hauptrohr (1) gewunden ist, wobei das zweite Faserverbundwerkstoffmaterial (32) das erste Faserverbundwerkstoffmaterial (31) außen bedeckt, oder das erste Faserverbundwerkstoffmaterial (31) und das zweite Faserverbundwerkstoffmaterial (32) sich abwechselnd um das Hauptrohr windet.

3. Förderrohr nach Anspruch 2, wobei 5°≤α1≤45°, und 45°≤α2≤90°.

4. Förderrohr nach Anspruch 1, wobei das Förderrohr ferner eine verschleißfeste Manschette (4) aufweist, wobei die verschleißfeste Manschette (4) und das Hauptrohr (1) jeweils in das Rohrverbindungselement (2) eingesetzt sind und aneinander anliegen, und wobei das dem Hauptrohr (1) abgewandte Ende der verschleißfesten Manschette (4) und das dem Hauptrohr (1) abgewandte Ende des Rohrverbindungselements (2) auf gleicher Höhe liegen.

5. Förderrohr nach Anspruch 4, wobei die verschleißfeste Manschette (4) eine größere Wandstärke als die Wandstärke des Hauptrohrs (1) hat, einen an ihrer äußeren Umgebungsfläche ausgebildeten abgestuften Teil hat und den gleichen Innendurchmesser wie das Hauptrohr (1) hat.

6. Förderrohr nach Anspruch 1, wobei ein eingeschlossener Winkel zwischen der Stirnfläche (P) des Vorsprungs (21), die dem Hauptrohr (1) gegenüberliegt, und der Mantellinie des äußeren Umgebungsflächenteils des Rohrverbindungselements (2), wo der Vorsprung (21) existiert, γ≤90° beträgt.

7. Förderrohr nach Anspruch 1, wobei an dem von dem Hauptrohr (1) abgewandten Ende ein Flansch (22) an der äußeren Umgebungsfläche des Rohrverbindungselements (2) ausgebildet ist, um eine Nut (23) zur Verbindung einer Rohrschelle (5) zwischen dem Flansch (22) und den Vorsprüngen (21) auszubilden.

8. Förderrohr nach einem der Ansprüche 1-7, wobei an jedem Rohrverbindungselement (2) eine ungerade Anzahl von Vorsprüngen (21) ausgebildet ist und die Vorsprünge (21) gleichmäßig in der Umfangsrichtung des Rohrverbindungselements (2) verteilt sind.

9. Förderrohr nach Anspruch 8, wobei an jedem Rohrverbindungselement (2) 5-45 Vorsprünge (21) ausgebildet sind.

10. Fördersystem, das eine Vielzahl von Förderrohren nach einem der Ansprüche 1-9 aufweist, wobei die Förderrohre über die Rohrverbindungselemente (2) nacheinander aneinander anliegen, um eine Förderrohrleitung auszubilden.

11. Herstellungsverfahren für ein Förderrohr, das ein Hauptrohr (1), Rohrverbindungselemente (2), die jeweils an den beiden Enden des Hauptrohrs (1) ausgebildet sind, und eine Faserschicht (3), die die äußere Umgebungsfläche des Hauptrohrs (1) bedeckt, aufweist, wobei die äußere Umgebungsfläche jedes Rohrverbindungselements (2) mit einer Vielzahl von Vorsprüngen (21) ausgebildet ist, wobei jedes Rohrverbindungselement (2) ein großes Ende, das dem Hauptrohr (1) gegenüberliegt, und ein kleines Ende, das dem Hauptrohr (1) zugewandt ist, aufweist, wobei eine kegelstumpfförmige Oberfläche, die sich in einer Richtung zu dem kleinen Ende hin verjüngt, auf einem äußeren Umgebungsflächenteil nahe dem kleinen Ende ausgebildet ist, wobei das Herstellungsverfahren die folgenden Schritte aufweist:
S1. Ein Schritt zum Winden der Faserschicht (3), der die folgenden Teilschritte aufweist:
S1-1. Befestigen eines Endes des Faserverbundwerkstoffmaterials an einem Vorsprung (21) an dem Rohrverbindungselement (2) an einem ersten Ende des Hauptrohrs (1),
S1-2. Bewirken, dass sich das Freigabeende des Faserverbundwerkstoffmaterials in der Umfangsrichtung bzw. in der axialen Richtung des Hauptrohrs (1) relativ zu dem Hauptrohr (1) und den Rohrverbindungselementen (2), die an den beiden Enden des Hauptrohrs (1) ausgebildet sind, derart bewegt, dass sich das
Faserverbundwerkstoffmaterial um das Hauptrohr (1) in einer Richtung von dem ersten Ende des Hauptrohrs (1) zu einem zweiten Ende des Hauptrohrs (1) windet, und dann das Freigabeende um den Vorsprung (21) des Rohrverbindungselements (2) an dem zweiten Ende des Hauptrohrs (1) haken zu lassen, wenn das Freigabeende den Vorsprung (21) erreicht, so dass eine Zugkraft in der axialen Richtung auf das Rohrverbindungselement (2) an dem zweiten Ende des Hauptrohrs (1) mithilfe des durch das Faserverbundwerkstoffmaterial eingehakten Vorsprungs (21) ausgeübt werden kann,
S1-3. Bewirken, dass sich das Freigabeende des Faserverbundwerkstoffmaterials in der Umfangsrichtung bzw. in der axialen Richtung des Hauptrohrs (1) relativ zu dem Hauptrohr (1) und den Rohrverbindungselementen (2) derart bewegt, dass sich das Faserverbundwerkstoffmaterial um das Hauptrohr (1) in einer Richtung auf das erste Ende des Hauptrohrs (1) zu windet, und dann das Freigabeende um den Vorsprung (21) des Rohrverbindungselements (2) an dem ersten Ende des Hauptrohrs (1) haken zu lassen, wenn das Freigabeende den Vorsprung (21) erreicht, so dass eine Zugkraft in der axialen Richtung auf das Rohrverbindungselement (2) an dem ersten Ende des Hauptrohrs (1) mithilfe des durch das Faserverbundwerkstoffmaterial eingehakten Vorsprungs (21) ausgeübt werden kann,
S1-4. Wiederholen der Teilschritte S1-2 und S1-3.

12. Herstellungsverfahren nach Anspruch 11, wobei in den Teilschritten S1-2 und S1-3 das Hauptrohr (1) und die Rohrverbindungselemente (2) auf einen Dorn befestigt und durch den Dorn zur Drehung angetrieben werden; gleichzeitig das Freigabeende angetrieben wird, um sich in der axialen Richtung derart zu bewegen, dass sich das Faserverbundwerkstoffmaterial um das Hauptrohr (1) windet, und/oder, wenn das Freigabeende die Vorsprünge (21) des Rohrverbindungselements (2) erreicht, wird das Freigabeende in einem stationären Zustand gehalten, und gleichzeitig werden das Hauptrohr (1) und die Rohrverbindungselemente (2) durch den Dorn angetrieben, um sich zu drehen, so dass das Faserverbundwerkstoffmaterial um den Vorsprung (21) gehakt wird.

13. Herstellungsverfahren nach Anspruch 11 oder 12, wobei sich das Faserverbundwerkstoffmaterial in dem Schritt S1 um das Hauptrohr (1) windet und sich kontinuierlich um die Vorsprünge (21) hakt, und jeder der Vorsprünge (21) durch das Faserverbundwerkstoffmaterial eingehakt wird nach der gebildeten Faserschicht (3).

## Revendications

1. Tuyau de convoyeur, comprenant un tuyau principal (1), des éléments de raccordement de tuyau (2) agencés respectivement à deux extrémités du tuyau principal (1), et une couche fibreuse (3) couvrant la surface environnante extérieure du tuyau principal (1), dans lequel la surface environnante extérieure de chaque élément de raccordement de tuyau (2) est pourvue d'une pluralité de saillies (21), au moins une partie de matériau composite fibreux de la couche fibreuse (3) s'enroule autour du tuyau principal (1) et s'accroche alternativement autour des saillies (21) des éléments de raccordement de tuyau (2) prévus respectivement aux deux extrémités du tuyau principal (1), de façon à ce qu'une force de traction dans une direction axiale soit appliquée sur les éléments de raccordement de tuyau (2) au moyen des saillies (21) accrochées par le matériau composite fibreux, **caractérisé en ce que** chaque élément de raccordement de tuyau (2) a une grande extrémité opposée au tuyau principal (1) et une petite extrémité faisant face au tuyau principal (1), dans lequel une surface tronconique qui est effilée dans une direction vers la petite extrémité est formée sur une partie de surface environnante extérieure près de la petite extrémité.

2. Tuyau de convoyeur selon la revendication 1, dans lequel le matériau composite fibreux comprend un premier matériau composite fibreux (31) et un second matériau composite fibreux (32), dans lequel, le premier matériau composite fibreux (31) s'enroule autour du tuyau principal (1) à un angle de spirale al plus petit qu'un angle de spirale α2 du second matériau composite fibreux (32) enroulé autour du tuyau principal (1), le second matériau composite fibreux (32) couvre l'extérieur du premier matériau composite fibreux (31), ou le premier matériau composite fibreux (31) et le second matériau composite fibreux (32) s'enroulent autour du tuyau principal alternativement.

3. Tuyau de convoyeur selon la revendication 2, dans lequel, 5° ≤ al ≤ 45°, et 45° ≤ α2 ≤ 90°.

4. Tuyau de convoyeur selon la revendication 1, dans lequel le tuyau de convoyeur comprend en outre un manchon résistant à l'usure (4), le manchon résistant à l'usure (4) et le tuyau principal (1) sont insérés dans l'élément de raccordement de tuyau (2) respectivement et joints par butée l'un à l'autre, et l'extrémité du manchon résistant à l'usure (4) à distance du tuyau principal (1) et l'extrémité de l'élément de raccordement de tuyau (2) à distance du tuyau principal (1) sont au même niveau l'une que l'autre.

5. Tuyau de convoyeur selon la revendication 4, dans lequel le manchon résistant à l'usure (4) a une épaisseur de paroi supérieure à l'épaisseur de paroi du tuyau principal (1), a une partie étagée formée sur sa surface environnante extérieure, et a le même diamètre intérieur que le tuyau principal (1).

6. Tuyau de convoyeur selon la revendication 1, dans lequel un angle inclus entre la face d'extrémité (P) de la saillie (21) à l'opposé du tuyau principal (1) et la génératrice de la partie de surface environnante extérieure de l'élément de raccordement de tuyau (2) où la saillie (21) existe est γ ≤ 90°.

7. Tuyau de convoyeur selon la revendication 1, dans lequel une bride (22) est formée sur la surface environnante extérieure de l'élément de raccordement de tuyau (2) à l'extrémité à distance du tuyau principal (1), de façon à former une rainure (23) permettant de relier une attache de tuyau (5) entre la bride (22) et les saillies (21).

8. Tuyau de convoyeur selon l'une quelconque des revendications 1 à 7, dans lequel un nombre impair de saillies (21) sont formées sur chaque élément de raccordement de tuyau (2), et les saillies (21) sont distribuées uniformément dans la direction circonférentielle de l'élément de raccordement de tuyau (2) .

9. Tuyau de convoyeur selon la revendication 8, dans lequel 5 à 45 saillies (21) sont formées sur chaque élément de raccordement de tuyau (2).

10. Système de convoyeur comprenant une pluralité de tuyaux de convoyeur selon l'une quelconque des revendications 1 à 9, dans lequel les tuyaux de convoyeur sont joints par butée de manière séquentielle via les éléments de raccordement de tuyau (2) pour former une conduite de convoyeur.

11. Procédé de fabrication d'un tuyau de convoyeur qui comprend un tuyau principal (1), des éléments de raccordement de tuyau (2) prévus respectivement aux deux extrémités du tuyau principal (1), et une couche fibreuse (3) couvrant la surface environnante extérieure du tuyau principal (1), dans lequel la surface environnante extérieure de chaque élément de raccordement de tuyau (2) est pourvue d'une pluralité de saillies (21), dans lequel chaque élément de raccordement de tuyau (2) a une grande extrémité à l'opposé du tuyau principal (1) et une petite extrémité faisant face au tuyau principal (1), et dans lequel une surface tronconique qui est effilée dans une direction vers la petite extrémité est formée sur une partie de surface environnante extérieure près de la petite extrémité ; ledit procédé de fabrication comprenant les étapes suivantes :
S1. une étape consistant à enrouler la couche fibreuse (3), qui comprend les sous-étapes suivantes :
S1-1. la fixation d'une extrémité du matériau composite fibreux sur une saillie (21) sur l'élément de raccordement de tuyau (2) à une première extrémité du tuyau principal (1) ;
S1-2. le fait d'amener l'extrémité de libération du matériau composite fibreux à se déplacer respectivement dans la direction circonférentielle et la direction axiale du tuyau principal (1) par rapport au tuyau principal (1) et aux éléments de raccordement de tuyau (2) prévus aux deux extrémités du tuyau principal (1), de façon à ce que le matériau composite fibreux s'enroule autour du tuyau principal (1) dans une direction à partir de la première extrémité du tuyau principal (1) jusqu'à une seconde extrémité du tuyau principal (1), puis le fait d'amener l'extrémité de libération à s'accrocher autour de la saillie (21) de l'élément de raccordement de tuyau (2) à la seconde extrémité du tuyau principal (1) lorsque l'extrémité de libération atteint la saillie (21), de façon à ce qu'une force de traction dans la direction axiale puisse être appliquée sur l'élément de raccordement de tuyau (2) à la seconde extrémité du tuyau principal (1) au moyen de la saillie (21) accrochée par le matériau composite fibreux ;
S1-3.le fait d'amener l'extrémité de libération du matériau composite fibreux à se déplacer respectivement dans la direction circonférentielle et la direction axiale du tuyau principal (1) par rapport au tuyau principal (1) et aux éléments de raccordement de tuyau (2), de façon à ce que le matériau composite fibreux s'enroule autour du tuyau principal (1) dans une direction vers la première extrémité du tuyau principal (1), puis le fait d'amener l'extrémité de libération à s'accrocher autour de la saillie (21) de l'élément de raccordement de tuyau (2) à la première extrémité du tuyau principal (1) lorsque l'extrémité de libération atteint la saillie (21), de façon à ce qu'une force de traction dans la direction axiale puisse être appliquée sur l'élément de raccordement de tuyau (2) à la première extrémité du tuyau principal (1) au moyen de la saillie (21) accrochée par le matériau composite fibreux ;
S1-4. la répétition des sous-étapes S1-2 et S1-3.

12. Procédé de fabrication selon la revendication 11, dans lequel, dans les sous-étapes S1-2 et S1-3, le tuyau principal (1) et les éléments de raccordement de tuyau (2) sont fixés sur un mandrin et sont entraînés par le mandrin pour tourner ; en même temps, l'extrémité de libération est entraînée pour se déplacer dans la direction axiale, de façon à ce que le matériau composite fibreux s'enroule autour du tuyau principal (1), et/ou, lorsque l'extrémité de libération atteint les saillies (21) de l'élément de raccordement de tuyau (2), l'extrémité de libération est maintenue dans un état immobile, et en même temps, le tuyau principal (1) et les éléments de raccordement de tuyau (2) sont entraînés par le mandrin pour tourner, de façon à ce que le matériau composite fibreux soit accroché autour de la saillie (21).

13. Procédé de fabrication selon la revendication 11 ou 12, dans lequel, dans l'étape S1, le matériau composite fibreux s'enroule autour du tuyau principal (1) et s'accroche autour des saillies (21) de manière continue, et chacune des saillies (21) est accrochée par le matériau composite fibreux après que la couche fibreuse (3) a été formée.
